(19) **Europäisches Patentamt**
**European Patent Office**
**Office européen des brevets**

(11) **EP 1 229 075 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**31.08.2011 Patentblatt 2011/35**

(45) Hinweis auf die Patenterteilung:
**12.10.2005 Patentblatt 2005/41**

(21) Anmeldenummer: **01710006.6**

(22) Anmeldetag: **01.02.2001**

(51) Int Cl.:
***C08L 3/02*** (2006.01)    ***C08K 3/34*** (2006.01)

(54) **Verfahren zur Herstellung eines thermoplastischen Polymerkomposits auf Stärkebasis mit integrierten nanoskopischen Teilchen**

Process for producing a thermoplastic polymer composite based on starch containing integrated nanoscopic particles

Procédé de préparation d'un composite de polymère thermoplastique à base d'amidon contenant des particules integrées nanoscopiques

(84) Benannte Vertragsstaaten:
**DE GB IT NL**

(43) Veröffentlichungstag der Anmeldung:
**07.08.2002 Patentblatt 2002/32**

(73) Patentinhaber: **BIOP Biopolymer Technologies AG**
**01217 Dresden (DE)**

(72) Erfinder:
 • **Berger, Werner, Prof., Dr.**
  **01217 Dresden (DE)**
 • **Jeromin, Lutz, Dr.**
  **40723 Hilden (DE)**
 • **Opitz, Guntram, Dr.**
  **01279 Dresden (DE)**
 • **de Vlieger, Jan, Dr.**
  **5629 PB Eindhoven (NL)**
 • **Fischer, Sabine, Dr.**
  **5731 TP Mierlo (NL)**

(74) Vertreter: **Kailuweit & Uhlemann Patentanwälte**
**Bamberger Straße 49**
**01187 Dresden (DE)**

(56) Entgegenhaltungen:
EP-A- 0 691 381    EP-A1- 0 040 723
WO-A-01/10949    WO-A1-90/10019

WO-A1-96/05254    WO-A1-99/25756
DE-A1- 4 038 732    DE-A1- 19 533 800
US-A- 5 322 866

• FISCHER S. ET AL: '"Green" nano-composite materials - new possibilities for bioplastics' MATERIALS RESEARCH SOCIETY Bd. 661, 2001,
• VAN SOEST J.J.G. ET AL: 'Changes in the mechanical properties of thermoplastic patato starch in relation with changes in B-type crystallinity' CARBOHYDRATE POLYMERS Bd. 29, 1996, Seiten 225 - 232
• FARHAT I.A. ET AL: 'The retrogradation of waxy maize starch extrudates: Effects of storage temperature and water content' BIOPOLYMERS, [Online] Bd. 53, Nr. 5, 2000, Seiten 411 - 422 Gefunden im Internet: <URL:http://www3.interscience.wiley.com/cgi -bin/abstract/71004211/ABSTRACT>
• AICHHOLZER W.; FRITZ H-G.: 'Charakterisierung der Stärkedestrukturierung bei de Aufbereitung von bioabbaubaren Polymerwerkstoffen' STARCH/STÄRKE Bd. 48, Nr. 11/12, 1996, Seiten 434 - 444
• FISCHER S. ET AL: ''Green' nano-composite materials - new possibilities for bioplastics' MATERIALEN Dezember 2000, Seiten 3 - 7,12
• VLIEGER DE J.J.: '"FAIR Project Contract no. CT98-4416: Biodegradable Nanocomposite Food Packaging "Bionanopack"' CONFERENCE PROCEEDINGS - THE FOOD BIOPACK CONFERENCE 27 August 2000 - 29 August 2000, COPENHAGEN, DENMARK, Seiten 108 - 109

EP 1 229 075 B2

**Beschreibung**

Die Erfindung betrifft ein Verfahren zur Herstellung eines thermoplastischen Polymerkomposits auf Stärkebasis mit integrierten nanoskopischen Teilchen auf der Basis nativer Stärke, einem hydrophobem derivatisierten Polysaccharid, synthetischen Polymeren, wie z. B. aliphatische Polyester und deren Copolymere, Polyvinylacetat (PVAc), Polyvinylalkohol (PVOH) und anderen vorzugsweise biologisch abbaubaren synthetischen Polymeren und Schichtsilikaten (Phyllosilikaten) sowie einem Verträglichkeitsvermittler und einem Destrukturierungsmittel. Das Reaktionsprodukt kann in Abhängigkeit von der Produktzusammensetzung auf konventionellen Thermoplast-Verarbeitungsmaschinen zu Spritzguß-, Tiefzieh- und Blasformteilen sowie Folien mit einstellbaren Gebrauchswerteigenschaften, z. B. erhöhter Wasserformbeständigkeii verbesserten Produkteigenschaften, wie z. B. erhöhte Dimensionsstabilität, hohen mechanischen Eigenschaften, reduzierter Gaspermeabilität und biologischer Abbaubarkeit, verarbeitet werden.

In den letzten Jahren sind zahlreiche Verfahren zur Herstellung und Verformung von thermoplastischer Stärke allein oder in einer Polymermischung bzw. Polymerschmelze oder Polymerblend (im folgenden Polymermischung) bekannt geworden. Diese Arbeiten wurden mit dem Ziel ausgeführt, neue bzw. erweiterte Einsatzfelder für nachwachsende Rohstoffe zu erschließen.

Es ist bekannt, die körnige Struktur nativer Stärke mit definierten Anteilen an Wasser oder/und niederen polyfunktionellen Alkoholen, wie Ethylenglykol, Propylenglykol, Glycerol, 1,3-Butandiol, Diglycerid, entsprechende Ether, aber auch Verbindungen wie Dimethylsulfoxid, Dimethylformamid, Dimethylharnstoff, Dimethylacetamid und/oder anderen Zusatzstoffen thermomechanisch zu thermoplastischem Material mit Hilfe von konventionellen Doppelwellenextrudern aufzuschließen.

Der Gebrauchswert des Extrudats und der aus ihm hergestellten Produkte ist gering. Insbesondere ist das Material stark hydrophil.

Die Herstellung eines verbesserten, wasserformbeständigen thermoplastischen Materials gelingt, wenn die Extrusion nativer Stärke mit einem Destrukturierungshilfsmittel mit einem Anteil von 30 - 60 % bezogen auf die Einsatzmenge in einem Doppelwellenextruder im Temperaturbereich von 70 - 105 °C, einer Verweilzeit von > 2 min ausgeführt und das Reaktionsprodukt anschließend zur Retrogradation gelagert wird.

Weitere Vorschläge befassen sich mit der Zumischung synthetisch gewonnener wasserfester Polymere, wie z. B. Polyethylen, Polypropylen oder aliphatische (Co-) Polyester, aliphatischaromatische Copolyester, Polyesteramide, Polyesterurethane und/oder Mischungen als Mischungskomponente für Stärke. Dabei tritt aber das Problem auf, daß die Verträglichkeit zwischen den Polymerkomponenten ungenügend ist und die biologische Abbaubarkeit bzw. auch die Kostenstruktur ungünstig werden.

Der Stand der Technik ist umfassend im Schrifttum dokumentiert. Als Bezug sei auf die Publikation von R.F.T.Stepto et al. "Injection Moulding of Natural Hydrophilic Polymers in the Presence of Water" Chimia 41 (1987) Nr. 3, S. 76-81 und die dort zitierte Literatur sowie beispielhaft auf die Patente DE 4116404, EP 0327505, DE 4038732, US 5106890, US 5439953, DE 4117628, WO 94/04600, DE 4209095, DE 4122212, EP 0404723 oder EP 407350 hingewiesen.

In zahlreichen Patentanwendungen, wie z.B. DE 40 32 732, DE 195 33 800, DE 19 75 0846 werden Mischungen aus thermoplastischer Stärke mit einem wasserfesten Polymeren sowie die Herstellung einer Komponente, die als Verträglichkeitsvermittler wirkt beschrieben.

Patentanmeldung DE 1993867.2 beinhaltet ein Verfahren zur Herstellung einer thermoplastischen Stärkemischung durch reaktive Extrusion einer Mischung von nativer Stärke in Gegenwart eines aciden Katalysators und wenigstens einem hydrophoben Polymer unter Zusatz einer hydrolysierten Komponente auf Polyvinylacetat-Basis und von niederen polyfunktionellen Alkoholen oder/ und Wasser, das zu einer wesentlichen Verbesserung von Produkteigenschaften und zur Erhöhung der Prozeßstabilität führt.

Zur Verbesserung der physikomechanischen Eigenschaften von Polymeren werden seit Jahrzehnten natürliche und seit den 90er Jahren aktivierte Tonmineralien, basierend z. B. auf Bentonit bzw. Montmorillonit, als Verstärkungsmaterial beschrieben (vgl. H.K.G. Theng in "Formation and Properties of Clay Polymercomplexes" Elsevier, Amsterdam 1979; E.P.Giannelis (Adv. Mater. 1996, 8, 29-35).

Beim Einsatz von natürlichen Tonmineralien als Füllstoff in Kunststoffen konnte bisher kein nennenswerter Einfluß der Grenzflächen zwischen den Partikeln des Tones und der Polymeren und damit auf die Werkstoffeigenschaften festgestellt werden.

In DE 195 40 623 A$_1$ wird ein Verfahren zur Herstellung von verbesserten Kompositmaterialien mit nanoskopischen Füllstoffteilchen, vorzugsweise anorganischer Natur, beschrieben, bei dem man oberflächenmodifizierte Füllstoffteilchen (ca. 5 Vol%) mit einer Affinität zur Matrixphase im agglomeratfreien Zustand in der Matrix verteilt und dadurch die Gebrauchseigenschaften derartiger Kompositmaterialien deutlich verbessert.

In DE 195 0 48 99 wird die Herstellung poröser Körper aus Ton beschrieben die mittels Gefriertrocknung der geformten, wässrigen Paste aus Polysaccharid-Tonkompositen erhalten werden.

In der Patenschrift DE-A-3808623 werden mit Schichtsilikaten verstärkte Polyamide beschrieben, wobei die Schichtsilikate mit kationischen Quellmitteln behandelt sind. Die Aktivierung der schichtförmigen Tonmineralien ist notwendig, um den für die Einlagerung von Polymerketten erforderlichen Schichtabstand zu erzeugen.

Nach EP 0691381 wird die drastische Verminderung der Gasdurchlässigkeit einer biologisch abbaubaren Folie erzielt indem diese Folie mit einer biologisch abbaubaren Harzzusammensetzung, die anorganische, schichtförmige Verbindungen mit einem Aspektverhältnis von 50 bis 5000 enthält, beschichtet wird. Als Harz zur Beschichtung werden hydrophile, wasserlösliche Polymere, wie Polyvinylalkohol und Polysaccharide genannt. Die anorganische Verbindung, die sich durch das o.a. Aspektverhältnis auszeichnet, wird fein verteilt in der Harzmatrix erhalten, wenn eine wäßrige Dispersion eines quellbaren Tonminerals mit einer Lösung des wasserlöslichen Polymers gemischt und auf einen polymeren Träger aufgetragen und anschließend getrocknet wird. Das biologisch abbaubare Trägermaterial, das mit der tonhaltigen Harzmischung beschichtet wird, ist eine Folie aus Polysacchariden oder einem biologisch abbaubaren Polyester.

Zahlreiche Patente beschreiben die Herstellung von aktivierten Schichtsilikaten:

- die z.B. Ammoniumsalze verwenden
  US Pat. No. 2 531 427, 5 698 624, 4 081 496, 5 110 501
- die Polymere und Oligomere verwenden, wie z.B. Polyvinylpyrrolidon, Polyvinylalkohol, Polyethylenglycol, Polytetrahydrofuran
  US Pat. No. 5 552 469, 5 578 672
- die organische Reagenzien und Monomere verwenden, wie z.B. Dodecylpyrrolidon, Caprolacton, Ethylencarbonat, Caprolactam, Ethylenglycol
  EP 780 340 A1

Geeignete Schichtsilikate (Phyllosilikate) sind u.a. Spezies und chemische Variationen aus den Gruppen Smectit (oder Montmorillonit), Vermiculit und Kaolinit, wie z.B. Na-Montmorillonit, Saponit, Na-Hectorit, Fluorohectorit, Beidellit, Nontronit, Vermiculit. Sie sollen eine Kationenaustauschkapazität von 30 - 250 Milliäquivalent/ 100 g besitzen, um eine effektive Aktivierung des Schichtsilikates zu erreichen.

US 5,322,866 beschreibt eine Methode zur Herstellung von Filmen auf Stärkebasis aus Stärke, Ethylenvinylalkohol (EvOH) oder Polyvinylalkohol, Zinkstearat oder Talk und Glycerol und Wasser. Talk oder Stereat werden als "nucleating agent" und Schmiermittel hinzugegeben. Talk ist ein wasserunlösliches Schichtsilikat, das aus Lagen besteht die ungeladen sind. EvOH ist nachteilig nicht biologisch abbaubar.

Ausgehend von den ökologischen Zielen, nachwachsende Rohstoffe noch stärker zu nutzen und umweltverträgliche Produkte wirtschaftlich herzustellen, ist es Aufgabe der Erfindung, ein Polymerkomposit auf Basis thermoplastischer Stärke mit verbesserten Eigenschaften zu schaffen.

Gefunden wurde, dass durch Zugabe von nanoskopischen Teilchen aus einem Schichtsilikat sowohl die Destrukturierung der Stärke bei niedrigen Temperaturen (< 100 °C) als auch die Wasserformbeständigkeit signifikant und die Prozessfähigkeit der hergestellten Produkte verbessert werden.

Erfindungsgemäß wird die Aufgabe durch ein Verfahren zur Herstellung eines thermoplastischen Polymerkomposits gemäß Anspruch 1 gelöst.

Dabei wird das thermoplastische Polymerkomposit auf Basis nativer Stärke, einem hydrophoben derivatisiertem Polysaccharid oder einem synthetischen Polymer unter Zusatz eines Verträglichkeitsvermittlers, Destrukturierungsmittel, einem Schichtsilikat, so hergestellt, dass das Gemisch in einem Doppelschneckenextruder bei einer Zylindertemperatur von 45 - 150 °C, vorzugsweise von 75 - 105 °C und einem spezifisch mechanischen Energieeintrag (SME) von 500 - 4000 kJ/kg zu einem Strang extrudiert und nach dessen Granulierung dicht verschlossen zur Ausbildung von wasserbeständigen Überstrukturen bis zur Weiterverarbeitung gelagert wird, wobei das Schichtsilikat ein mit Wasser im definierten Verhältnis Ton mit Wasser aktivierter Ton ist und der Aktivierungsschritt dem Extrusionsschritt vorgelagert ist oder in der Extrusion erfolgt und wobei die Lagerung bei hohen Luftfeuchten > 80 % oder in dicht verschlossen Räumen oder Behältern mit Luftaustausch und Lagerzeiten von 1 bis 24 h erfolgt.

Mit dem Begriff delaminiertes Schichtsilikat wird die im Prozeß der Extrusion der Polymermischung durch weitere Quellung und Schereinwirkung (Shear-rate > $10^{-1}$.... $s^{-1}$) bewirkte Vereinzelung der Schichten des Silikates und ihrer Wechselwirkung mit der Polymeroberfläche bezeichnet.

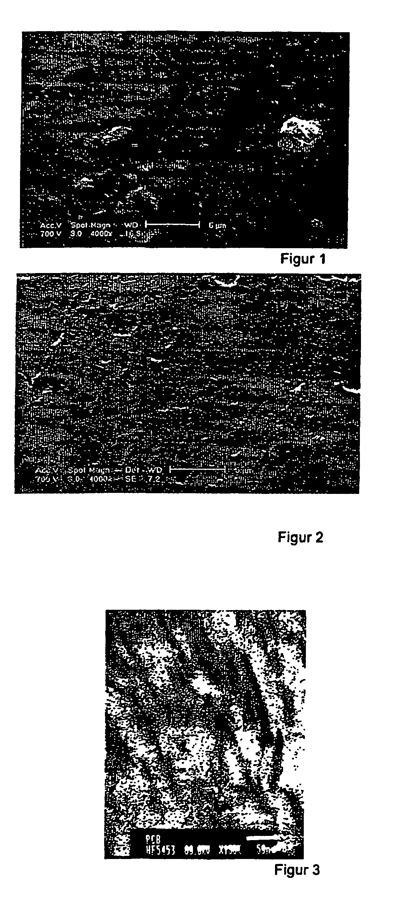

REM-Aufnahmen von Kompositmaterialien mit delaminierten Schichtsilikaten zeigen im Gegensatz zu konventionellen Mischungen von nichtaktivierten Tonen mit Polymeren eine Abwesenheit von Tonclustern und belegen damit die Vereinzelung von delaminierten Plättchen der Schichtsilikate. Dies wird anhand der als Fig. 1 beigefügten REM-Aufnahmen deutlich. Fig. 1 beinhaltet eine rasterelektronische Aufnahme einer Bruchfläche einer Folie mit Schichtsilikat-Cluster, Fig. 2 eine REM-Aufnahme eines erfindungsgemäß hergestellten Polymerkomposits mit nanoskopisch verteiltem Schichtsilikat (ohne Cluster). Mittels TEM können auch die einzelnen delaminierten Schichten der Schichtsilikate bildlich dargestellt und von Paketen bestehend aus einigen wenigen Schichten unterschieden werden (vergleiche dazu Fig. 3, TEM-Aufnahme des nanoskopisch verteilten Schichtsilikates in der Matrix aus thermoplastischer Stärke).

In Abhängigkeit von der chemischen Natur der Ausgangskomponenten bei der Herstellung der Polymermischung wird hinsichtlich der hydrophilen Stärkekomponente ein mit Wasser im definierten Verhältnis Ton mit Wasser aktivierter Ton als Schichtsilikat eingesetzt. Der Aktivierungsschritt ist dem Extrusionsschritt vorgelagert oder erfolgt in der Extrusion zur Herstellung der erfindungsgemäß verwendeten Produkte.

Unter einem mit Wasser im definierten Verhältnis Ton mit Wasser aktiviertem Ton wird im Sinne der vorliegenden Erfindung ein durch Einwirkung von Wasser auf natürlichen Ton als Schichtsilikat (Phyllosilikat) erhaltenes Produkt verstanden, daß durch vergrößerte Schichtabstände (20 - 40 Å) und einheitlicher Polarität charakterisiert wird.

In Gegenwart geeigneter Weichmacher kann das synthetische Polymer ein aliphatischer Polyester oder deren aliphatisch/aromatische Copolymere, PVAc oder dessen Copolymere oder Polyvinylalkohol sein.

Das thermoplastische Polymerkomposit kann im weiteren Streckmittel, Füllstoffe, Gleitmittel, Fließmittel, Farbstoff, Pigmente oder Mischungen davon enthalten.

Die Stärkekomponente des Polymerkomposits weist ein gegenüber der nativen Stärke nur um eine Zehnerpotenz verringertes Molekulargewicht auf.

Das thermoplastische Polymerkomposit mit mindestens einem synthetischen Polymer und einem Verträglichkeitsvermittler ist durch Extrusion bzw. reaktive Extrusion einer Mischung von nativer Stärke und wenigstens einem hydrophoben Polymer unter Zusatz eines Verträglichkeitsvermittlers und von niederen polyfunktionellen Alkoholen oder/und Wasser ohne oder in Gegenwart eines aciden Katalysators unter Zusatz aktivierter Schichtsilikate erhältlich.

In einer vorteilhaften Ausgestaltung der Erfindung wird das thermoplastische Polymerkomposit durch Extrusion bzw. reaktive Extrusion einer Mischung von nativer Stärke und wenigstens einem hydrophoben Polymer unter Zusatz eines Verträglichkeitsvermittlers und von niederen polyfunktionellen Alkoholen oder/und Wasser ohne oder in Gegenwart eines aciden Katalysators so hergestellt, daß die Mischung unter Zusatz nativer Schichtsilikate extrudiert wird, wobei die Aktivierung der Schichtsilikate im Verfahrensschritt erfolgt.

Als Verträglichkeitsvermittler wird eine Hydrolysekomponente auf Polyvinylacetat-Basis verwendet, wobei der Hydrolysegrad 10 - 70 %, vorzugsweise 30-40 % aufweist. Als synthetisches Polymer wird ein aliphatischer Polyester oder deren aliphatisch/aromatische Copolymere, PVAc oder dessen Copolymere, Polyvinylalkohol oder thermoplastische Stärke- und/ oder Cellulosederivate in Gegenwart geeigneter Weichmacher eingesetzt.

Die nanoskopischen Teilchen sind Plättchen bestehend aus den kleinsten atomaren Wiederholungseinheiten der Schichtsilikate, mit einer Längenausdehnung von ca. 1 $\mu$m, sind ca. 1 nm dick und haben eine spezifische Oberfläche von 750 m$^2$/g. Sie zeichnen sich durch einen niedrigen thermischen Ausdehnungskoeffizienten von kleiner gleich 10$^{-4}$ K$^{-1}$ bis 5 10$^{-7}$ K$^{-1}$ und durch ihre thixotrope Wirkung in Dispersionen aus. Dieser Effekt beruht z.T. auf der Ausbildung eines perkolierenden Gerüstes. Die viskositätsverändernden und grenzflächenaktiven Eigenschaften der nanoskopischen Teilchen können durch die Produktzusammensetzung und Verarbeitungsparameter eingestellt werden.

Der Volumenanteil der nanoskopischen Teilchen kann je nach dem Verarbeitungsprozeß z.B. bei der Folienherstellung 1 - 20 Vol%, vorzugsweise 2 - 20 Vol%, z.B. bei der Spritzgußherstellung 2 - 50 Vol%, vorzugsweise 5 - 20 Vol% betragen.

Die Erfindung beinhaltet auch die Verwendung des thermoplastischen Polymerkomposits für die Herstellung von Spritzguß-, Tiefzieh- oder Blasformteilen, Folien oder Faserrohstoffen sowie als Material für Schmelzebeschichtungen, die nach der Herstellung einer Retrogradation zur Ausbildung von wasserbeständigen Überstrukturen durch Lagerung bei hohen Luftfeuchten > 80 % oder in dicht verschlossenen Räumen oder Behältern ohne Luftaustausch und Lagerzeiten von 1 bis 24 h, vorzugsweise 5 - 10 h, unterworfen werden.

Anhand nachfolgenden Bezugbeispiels wird die Aktivierung des Schichtsilikates näher erläutert:

***Bezugsbeispiel 1***

## Aktivierung des Schichtsilikates

Zur Aktivierung des Schichtsilikates wurde dieser mit Wasser (Schichtsilikat / H$_2$O = 60 : 40 bis 30 : 70) in einem Extrusionsprozeß gemischt.

Beispielhaft wurden 40 g eines trockenen Na-Montmorillonits (Versuchsprodukt EXM 757, Südchemie AG) in einem Doppelschneckenextruder unter Zugabe von 60 g destilliertem Wasser bei 30 °C mit Schneckendrehzahlen zwischen 30 und 250 min$^{-1}$ extrudiert. Das in Strangform erhaltene, homogene Material wurde 24 h bei 7 °C zwischengelagert.

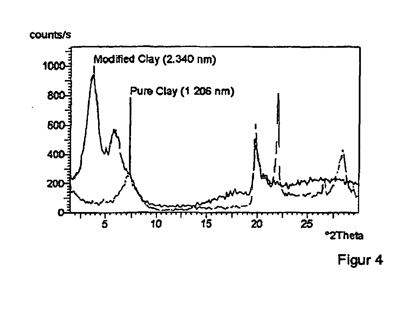

Die Aktivierung des Montmorillonits ist anhand der Röntgen-Streuwinkelmessungen ersichtlich (siehe Fig. 4). Das Quellen des Tones erhöht den Abstand der Silikatschichten von 1,26 nm auf 2,4 nm und bietet daher die Voraussetzung für eine vollständige Delaminierung und homogene Verteilung der Tonplättchen innerhalb der Stärkematrix während der Extrusion zur Kompositherstellung.

## SME = Spezifischer mechanischer Energieeintrag

Der spezifische mechanische Energieeintrag in das Extrusionsgut während der Extrusion kann bei gemessenem Drehmoment (Summe der Drehmomente beider Schnecken) nach folgender Gleichung abgeschätzt werden.

$$SME = (2\pi * M * n) / m$$

SME     Spezifischer mechanischer Energieeintrag

M     Drehmoment in Nm

n     Schneckendrehzahl in min$^{-1}$

m      Durchsatz in kg/h

## Röntgenbeugung

Philips X'Pert, Cu-K$_\square$ - Strahlung, Wellenlänge = 0,1542 nm, Reflexionsmodus

Elektronenmikroskopie

REM:     Phillips ESEM XL 30 ESEM/FEG
TEM:     JEOL 2000 FX, 80 keV

## Patentansprüche

1. Verfahren zur Herstellung eines thermoplastischen Polymerkomposits auf Basis nativer Stärke, einem hydrophoben derivatisiertem Polysaccharid oder einem synthetischen Polymer unter Zusatz eines Verträglichkeitsvermittlers, Destrukturierungsmittel, einem Schichtsilikat, **dadurch gekennzeichnet, dass** das Gemisch in einem Doppelschneckenextruder bei einer Zylindertemperatur von 45 - 150 °C, vorzugsweise von 75 - 105 °C und einen spezifisch mechanischen Energieeintrag (SME) von 500 - 4000 kJ/kg zu einem Strang extrudiert und nach dessen Granulierung bei hohen Luftfeuchten > 80 % oder in dicht verschlossenen Räumen oder Behältern ohne Luftaustausch und Lagerzeiten von 1 bis 24 h gelagert wird, wobei das Schichtsilikat ein mit Wasser im definierten Verhältnis Ton mit Wasser aktivierter Ton ist und der Aktivierungsschritt dem Extrusionsschritt vorgelagert ist oder in der Extrusion erfolgt.

2. Verfahren nach Anspruch 1, **dadurch gekennzeichnet, daß** als Verträglichkeitsvermittler eine Hydrölysekomponente auf Polyvinylacetat-Basis verwendet wird, wobei der Hydrolysegrad 10 - 70 %, vorzugsweise 30 - 40 % aufweist.

3. Verwendung eines thermoplastischen Polymerkomposits nach jeweils einem der Ansprüche 1 bis 2 für die Herstellung von Spritzguß-, Tiefzieh- oder Blasformteilen, Folien oder Faserstoffen sowie als Material für Schmelzebeschichtungen.

## Claims

1. Process for the production of a thermoplastic polymer composite based on native starch, a hydrophobic derivatized polysaccharide or a synthetic polymer while adding a compatibility mediator, destructuring agent, a sheet silicate **characterized in that** the mixture is extruded in a twin-screw extruder at a cylinder temperature of 45-150°C, preferably 75-105°C, and a specific mechanic energy input of 500-4000 kJ/kg to a strand and after the granulation thereof is stored at high air humidities > 80% or in tightly sealed rooms or containers without air exchange for a storage time from 1 to 24 hours, whereas the sheet silicate is a water activated clay activated in a defined water clay ratio and whereas the activation step is performed before the extrusion step or during extrusion.

2. Process according to claim 1 **characterized in that** a polyvinylacetate based hydrolysis component is used as compatibility mediator, whereby the degree of hydrolysis is 10%-70%, preferably 30%-40%.

3. Use of a thermoplastic polymer composite to any of the claims 1 to 2 for the production of injection-moulded parts, deep-drawn parts or blow-moulded parts, foils or fibre materials and as material for melt coatings.

## Revendications

1. Procédé de fabrication d'un composite de polymère thermoplastique à base d'amidon natif, d'un polysaccharide dérivé de façon hydrophobe ou d'un polymère synthétique en ajoutant un agent de compatibilité, des agents de déstructuration, un phyllosilicate, **caractérisé en ce que** le mélange est extrudé en une billette ou boudin dans une extrudeuse double vis à une température de cylindre comprise entre 45 et 150 °C, de préférence entre 75 et 105 °C, et avec un apport d'énergie mécanique spécifique (SME) compris entre 500 et 4 000 kJ/kg, et qu'après sa granulation, il est stocké avec des humidités de l'air élevées > 80 % ou dans des pièces ou conteneurs fermés de façon étanche sans échange d'air et pendant des durées de stockage comprises entre 1 et 24 h, le phyllosilicate étant une glaise activée avec de l'eau dans un rapport glaise de l'eau definé et la démarche d'activation est exécutée avant la démarche d'extrusion ou pendant l'extrusion.

2. Procédé selon la revendication 1, **caractérisé en ce qu'**en tant qu'agent de compatibilité, on utilise un composant d'hydrolyse à base d'acétate de polyvinyle, le degré d'hydrolyse étant compris entre 10 et 70 %, de préférence entre 30 et 40 %.

3. Utilisation d'un composite de polymère thermoplastique selon respectivement l'une des revendications 1 à 2 pour la fabrication de pièces moulées par injection, par emboutissage ou par soufflage, de feuilles ou de matières fibreuses, ainsi qu'en tant que matériau pour revêtements par coulée.

Figur 1

Figur 2

Figur 3

6

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4116404
- EP 0327505 A
- DE 4038732
- US 5106890 A
- US 5439953 A
- DE 4117628
- WO 9404600 A
- DE 4209095
- DE 4122212
- EP 0404723 A
- EP 407350 A
- DE 4032732
- DE 19533800
- DE 19750846

- DE 1993867
- DE 19540623 A
- DE 19504899
- DE 3808623 A
- EP 0691381 A
- US 2531427 A
- US 5698624 A
- US 4081496 A
- US 5110501 A
- US 5552469 A
- US 5578672 A
- EP 780340 A1
- US 5322866 A